# EUROPÄISCHE PATENTANMELDUNG

(11) **EP 3 835 026 A1**
(43) Veröffentlichungstag der Anmeldung: **16.06.2021**
(21) Anmeldenummer: 20210163.0
(22) Anmeldetag: 27.11.2020
(51) Int. Cl.: B29C 45/26, B29C 45/33, B29C 45/36, B29K 105/00

(54) **MEHRTEILIGER KERNEINSATZ**

(30) Priorität: 13.12.2019 DE 102019134317
(71) Anmelder: MHT Mold & Hotrunner Technology AG, 65239 Hochheim (DE)
(72) Erfinder: Brinzing, Matthias, 64295 Darmstadt (DE); Hönisch, Marek, 65510 Hünstetten (DE); Gebauer, Thomas, 66709 Weiskirchen (DE); Wagner, Christian, 55126 Mainz (DE)
(74) Vertreter: WSL Patentanwälte Partnerschaft mbB

(57) **Zusammenfassung**

Die vorliegende Erfindung betrifft einen mehrteiligen Kerneinsatz (1) für eine Spritzgießform (100) zur Herstellung von Vorformlingen aufweisend einen zweiteiligen Kern mit einer Längsachse (10), wobei der zweiteilige Kern ein unteres Kernteil (20) und ein in Richtung der Längsachse neben dem unteren Kernteil (20) angeordnetes oberes Kernteil (30) aufweist und ein Befestigungselement (40), wobei das Befestigungselement (40) eine Öffnung parallel zu der Längsachse (10) zur Aufnahme des oberen Kernteils (30) aufweist, und wobei mit dem Befestigungselement (40) das obere Kernteil (30) an einem Ende (22) des unteren Kernteils (20) befestigbar ist. Um einen Kerneinsatz für eine Spritzgießform bereitzustellen, dessen formgebender Abschnitt sich einfach und schnell auswechseln lässt, wobei gleichzeitig die Qualität und Funktionalität des Spritzgussvorgangs gewährleistet wird, wird erfindungsgemäß vorgeschlagen, dass das Befestigungselement (40) und oberes Kernteil (30) derart ausgebildet sind, dass, wenn das obere Kernteil (30) in der Öffnung aufgenommen ist zumindest in axialer Richtung eine form- und/oder kraftschlüssige Verbindung zwischen dem im Befestigungselement (40) aufgenommenen oberen Kernteil (30) und dem Befestigungselement (40) herstellbar ist und dass das Befestigungselement (40) und das untere Kernteil (20) derart ausgestaltet sind, dass das Befestigungselement (40) nur in einer Position oder in mehreren Positionen, die sich durch eine Drehung des Befestigungselementes (40) relativ zum unteren Kernteil (20) um die Längsachse (10) unterscheiden, am unteren Kernteil befestigt werden kann, wobei nur eine endliche Anzahl von Positionen, vorzugsweise maximal vier Positionen, des Befestigungselements (40) relativ zu dem unteren Kernteil (20) möglich sind.

## Beschreibung

Die vorliegende Erfindung betrifft einen mehrteiligen Kerneinsatz für eine Spritzgießform zur Herstellung von Vorformlingen aufweisend einen zweiteiligen Kern mit einer Längsachse, wobei der zweiteilige Kern ein unteres Kernteil und ein in Richtung der Längsachse neben dem unteren Kernteil angeordnetes oberes Kernteil aufweist, und ein Befestigungselement, wobei das Befestigungselement im Wesentlichen hohlzylindrisch ausgebildet ist und eine Längsachse aufweist, wobei das Befestigungselement eine Öffnung parallel zu der Längsachse zur Aufnahme des oberen Kernteils aufweist, und wobei mit dem Befestigungselement das obere Kernteil an einem Ende des unteren Kernteils befestigbar ist.

Derartige Kerneinsätze werden vor allem in Spritzgießformen für das Spritzgießen von Vorformlingen verwendet. Solche Vorformlinge können z.B. PET-Vorformlinge sein, die in einem weiteren Bearbeitungsschritt zu PET-Flaschen aufgeblasen werden. Um einen Vorformling herzustellen, wird ein aus einem Kunststoff bestehendes Granulat plastifiziert, d.h. aufgeschmolzen und homogenisiert. Anschließend wird unter hohem Druck die plastifizierte Schmelze in einen Formraum der Spritzgießform eingespritzt.

Ein Teil dieses Formraums und damit ein Teil der Form des Vorformlings wird von der Außenkontur des Kerneinsatzes bestimmt, nämlich der innere Teil bzw. die Innenfläche des herzustellenden Vorformlings.

Die plastifizierte Schmelze bleibt nach dem Einspritzen solange im Formraum, bis diese sich soweit abgekühlt hat, dass der Vorformling stabil ist und entnommen werden kann. Um ein schnelles Abkühlen der plastifizierten Schmelze zu gewährleisten, weist der Kerneinsatz häufig ein Kühlsystem auf, das den Vorformling an dessen Innenseite abkühlt. Zu diesem Zweck ist in dem Inneren des Kerneinsatzes ein Kanalsystem ausgebildet, durch welches eine Kühlflüssigkeit geführt wird.

Diejenigen Flächen des Kerneinsatzes, die mit der plastifizierten Schmelze in Kontakt treten, unterliegen einem erhöhten Verschleiß. Dies liegt im Wesentlichen daran, dass sie aufgrund des Spritzgießvorgangs wiederholt großen Druck- und Temperaturschwankungen ausgesetzt sind.

In der Regel sind Kerneinsätze derartiger Spritzgießformen einteilig ausgestaltet. In diesem Fall muss der komplette Kerneinsatz ausgetauscht werden, wenn die Außenkontur eines Kerneinsatzes verschlissen ist. Nicht selten werden die beschriebenen Spritzgießformen auch zum Herstellen von Vorformlingen mit verschiedenen Konturen verwendet. Um die Kontur eines Vorformlings zu ändern, muss zumindest der formgebende Teil des Kerneinsatzes ausgetauscht werden. Bei einteiligen Kerneinsätzen bedeutet dies jedoch ebenfalls den vollständigen Austausch des Kerneinsatzes. Das vollständige Austauschen der Kerneinsätze ist allerdings sowohl material- als auch zeitintensiv.

Aus dem Stand der Technik sind daher Kerneinsätze bekannt, die einen zweiteiligen Kerneinsatz bereitstellen, wobei lediglich ein Teil des Kerneinsatzes zu der Form des Vorformlings beiträgt und damit erhöhtem Verschleiß ausgesetzt ist. Bei derartigen Kerneinsätzen ist es ausreichend, wenn lediglich der entsprechende Teil des Kerneinsatzes ausgetauscht wird, wenn dieser verschlissen ist oder wenn eine andere Form von Vorformlingen hergestellt werden soll. Auf diese Weise kann Material eingespart werden.

Bei derartigen zweiteiligen Kerneinsätzen muss jedoch sichergestellt werden, dass beide Teile des Kerneinsatzes zuverlässig miteinander verbunden sind, um den Ausschuss bei der Produktion der Vorformlinge zu minimieren. Sind die Teile nicht zuverlässig miteinander verbunden und der Teil, welcher zu der Form des Vorformlings beiträgt, kann sich während dem Einspritzvorgang bewegen, indem er beispielsweise eine Kippbewegung relativ zu dem anderen Teil des Kerneinsatzes vollführt, führt dies zu einer ungewollten und unkalkulierbaren Veränderung des Formraums, in welchem der Vorformling hergestellt wird. Derartige unkontrollierbare Veränderungen des Formraums führen mindestens zu veränderten Wandstärken des Vorformlings, die im schlimmsten Fall zu einer Unverwertbarkeit des Vorformlings führen. Zudem besteht die Gefahr, dass Kühlflüssigkeit zwischen unterem und oberem Kernteil austritt.

Aus der WO 2019/011969 ist daher beispielsweise ein Stützring bekannt, welcher die beiden Teile des Kerneinsatzes miteinander verbindet, in dem der Stützring den Teil des Kerneinsatzes, der zu der Form des Vorformlings beiträgt, in Richtung des anderen Teils des Kerneinsatzes spannt, der nicht zu der Form des Vorformlings beiträgt. Zu diesem Zweck erstreckt sich der Stützring entlang des unteren Kernteils, der nicht zur Form beiträgt, sodass der Stützring an einer Basisplatte befestigt werden kann, die sich an einem dem vorderen Kernteil des Kerneinsatzes abgewandten Ende des hinteren Kernteils befindet.

Hierbei hat es sich jedoch als nachteilig erwiesen, dass zur Auswechslung des vorderen Kernteils dennoch der vollständige Kerneinsatz demontiert werden muss, da der Stützring an der Basisplatte befestigt ist, auf welcher der gesamte Kerneinsatz montiert ist. Die Auswechselung des Kerneinsatzes ist damit sehr zeitintensiv.

Da bei der Produktion von Vorformlingen im Spritzgussverfahren eine möglichst große Anzahl von Vorformlingen in möglichst geringer Zeit gefertigt werden soll, ist ein Ausfall der Anlage aufgrund von Austauscharbeiten an den Kerneinsätzen vorteilhafterweise so gering wie möglich zu halten.

Ausgehend von dem beschriebenen Stand der Technik ist es daher Aufgabe der vorliegenden Erfindung, einen Kerneinsatz für eine Spritzgießform bereitzustellen, dessen formgebender Abschnitt sich einfach und schnell auswechseln lässt, wobei gleichzeitig die Qualität und Funktionalität des Spritzgussvorgangs gewährleistet wird.

Diese Aufgabe wird erfindungsgemäß durch einen mehrteiligen Kerneinsatz wie oben beschrieben gelöst, bei dem Befestigungselement und oberes Kernteil derart ausgebildet sind, dass, wenn das oberer Kernteil in der Öffnung aufgenommen ist, zumindest in axialer Richtung eine form- und/oder kraftschlüssige Verbindung zwischen dem im Befestigungselement aufgenommenen oberen Kernteil und dem Befestigungselement herstellbar ist, und bei dem das Befestigungselement und der untere Kernteil derart ausgestaltet sind, dass das Befestigungselement nur in einer Position oder in mehreren Positionen, die sich durch eine Drehung des Befestigungselementes relativ zum unteren Kernteil um die Längsachse unterscheiden, am unteren Kernteil befestigt werden kann, wobei nur eine endliche Anzahl von Positionen, vorzugsweise maximal vier Positionen des Befestigungselementes relativ zu dem unteren Kernteil möglich sind.

Der Vorteil des erfindungsgemäßen Befestigungselements besteht darin, dass hiermit das obere Kernteil direkt an dem unteren Kernteil befestigt wird, unabhängig von der Befestigung des unteren Kernteiles an einer Basisplatte. Somit kann das obere Kernteil besonders einfach ausgewechselt werden, indem lediglich das Befestigungselement von dem unteren Kernteil gelöst werden muss, welcher leichter zugänglich ist als eine Basisplatte, auf welcher häufig mehrere Kerneinsätze unmittelbar nebeneinander angeordnet sind. Die Ausfallzeiten einer Spritzgießanlage aufgrund von Umbauarbeiten werden damit minimiert.

Das Befestigungselement ist derart ausgestaltet, dass das obere Kernteil in dem Befestigungselement aufnehmbar ist. Zu diesem Zweck weist das Befestigungselement eine Durchgangsöffnung auf, so dass das Befestigungselement eine im Wesentlichen hohlzylindrische Form aufweist. Die Durchgangsöffnung erstreckt sich parallel zu der Längsachse. Durchgangsöffnungen, die sich entlang der Längsachse erstrecken, gelten ebenfalls als parallel zu der Längsachse ausgerichtet. In die Durchgangsöffnung kann das obere Kernteil des Kerneinsatzes aufgenommen werden.

Das obere und das untere Kernteil weisen ebenfalls einen im Wesentlichen zylindrischen Querschnitt auf. Der Begriff "im Wesentlichen zylindrisch" bzw. "im Wesentlichen hohlzylindrisch" bezieht sich nicht ausschließlich auf exakt runde Formen. Vielmehr sind auch Kerneinsätze mit anderen Querschnittsformen, beispielsweise Quadrate, Sechs- oder andere Vielecke denkbar. Die Querschnittsform der Öffnung des Befestigungselements muss lediglich an die Querschnittsform des oberen Kernteils angepasst sein.

Dadurch, dass das Befestigungselement nur in einer Position oder nur in einer begrenzten Anzahl von Positionen, die sich lediglich durch eine Relativdrehung des Befestigungselementes gegenüber dem unteren Kernteil unterscheiden, kann das Befestigungselement weitere Funktionen, wie z.B. das Bereitstellen eines Fluidkanals oder das Bereitstellen einer Halterung für z.B. einen Sensor, erfüllen. In jedem Fall kann das Befestigungselement nur in vorbestimmten Positionen an dem unteren Kernteil befestigt werden.

Um das obere Kernteil in dem Befestigungselement aufzunehmen, ist der mehrteilige Kerneinsatz in einer Ausführungsform derart ausgestaltet, dass das obere Kernteil und die Öffnung des Befestigungselements zueinander korrespondierende Anschlagsflächen aufweisen, wobei die Anschlagsflächen vorzugweise derart ausgebildet sind, dass eine axiale Relativbewegung des Befestigungselements gegenüber dem oberen Kernteil in Richtung des dem unteren Kernteil zugewandten Teils des oberen Kernteils und/oder eine radiale Relativbewegung zwischen Befestigungselement und oberem Kernteil begrenzt wird.

Vorzugsweise kann das Befestigungselement nur von einer Seite des oberen Kernteiles auf dieses aufgesetzt werden, um den erfindungsgemäßen mehrteiligen Kerneinsatz zusammenzusetzen. An ein dem unteren Kernteil zugewandten Ende des oberen Kernteiles kann der Durchmesser desselben größer als ein Durchmesser der Öffnung des Befestigungselementes sein, sodass es nicht möglich ist, das obere Kernteil durch das Befestigungselement vollständig hindurchzuführen.

In einer weiteren Ausführungsform des mehrteiligen Kerneinsatzes sind die korrespondierenden Anschlagsflächen der Öffnung des Befestigungselementes und des oberen Kernteiles konisch ausgestaltet. Eine konische Fläche ist ein Abschnitt auf einer Außenfläche (Mantelfläche) eines Kegelstumpfes oder eines Kegels. So kann auf das obere Kernteil besonders effektiv eine Haltekraft in einer Richtung parallel zu der Längsachse ausgeübt werden.

In einer weiteren Ausführungsform ist der Konus derart ausgestaltet, dass sein Außendurchmesser in Richtung des unteren Kernteils größer wird.

Alternativ können in einer weiteren Ausführungsform des mehrteiligen Kerneinsatzes die korrespondierenden Anschlagsflächen zwei zueinander winklig angeordnete, vorzugsweise zueinander senkrecht stehende Anschlagsflächenabschnitte aufweisen, wobei vorzugsweise jeweils einer der Kontaktflächenabschnitte parallel zu der Längsachse des Befestigungselements ist. Eine Kombination mit einer konischen Anschlagsfläche ist jedoch auch denkbar.

In einer weiteren Ausführungsform des mehrteiligen Kerneinsatzes ist das erfindungsgemäße Befestigungselement derart ausgestaltet, dass die Anschlagsfläche des Befestigungselements und die Anschlagsfläche des oberen Kernteils mit einer Spielpassung aufeinander angepasst sind. Die Spielpassung der beiden Anschlagsflächen führt dazu, dass das obere Kernteil auch in einem zusammengesetzten Zustand des mehrteiligen Kerneinsatzes schwimmend in dem Befestigungselement gelagert ist. Spielpassung bedeutet in diesem Fall, dass die Anschlagsflächen zumindest in radialer Richtung nicht oder nicht vollumfänglich miteinander in Kontakt stehen, sondern ein Spalt von beispielsweise wenigen Mikrometern besteht.

Dies bietet den Vorteil, dass wenn der mehrteilige Kerneinsatz in einer Spritzgießform zusammengesetzt wird, indem ein sogenannter Kavitäteneinsatz über das obere Kernteil gestülpt wird, weniger Verschleiß an dem oberen Kernteil entsteht, da das obere Kernteil gegenüber dem Kavitäteneinsatz leicht verschoben werden kann. Durch das Spiel wird auch der Verschleiß an dem Befestigungselement reduziert, in welches der Kavitäteneinsatz eingreift, um eine stabile Verbindung zwischen dem Kerneinsatz und dem Kavitäteneinsatz zu erzielen.

Das in dem Befestigungselement aufgenommene obere Kernteil wird durch das Befestigungselement in einem zusammengesetzten Zustand des mehrteiligen Kerneinsatzes an dem unteren Kernteil befestigt.

In dem zusammengesetzten Zustand des mehrteiligen Kerneinsatzes sind die Längsachsen des oberen und unteren Kernteils sowie des Befestigungselements parallel zueinander. Vorzugsweise haben alle drei Komponenten eine gemeinsame zentrale Längsachse, welche eine Rotationssymmetrie des mehrteiligen Kerneinsatzes beschreibt.

Weiterhin vorzugsweise berühren sich die einander zugewandten Endflächen des oberen und unteren Kernteils. Dabei ist es besonders bevorzugt, dass die beiden Endflächen bündig aneinander anschließen. Beispielsweise könnten beide Endflächen den gleichen Innen- und/oder Außendurchmesser aufweisen.

Ein Teil einer Außenkontur des oberen Kernteiles trägt zu der Innenform des herzustellenden Vorformlings bei, während das untere Kernteil nicht zu der Form des Vorformlings beiträgt und primär der Befestigung des Kerneinsatzes an einer Basisplatte, also einer Werkzeughalterung, sowie der Zuführung und Abführung von Kühlflüssigkeit dient.

Um einen Vorformling effektiv abzukühlen, ist es sinnvoll, die formgebende Außenkontur des oberen Kernteils durch eine permanente Wasserzu- und abfuhr zu kühlen. Zu diesem Zweck befindet sich in dem unteren Kernteil eine Durchgangsbohrung und in dem oberen Kernteil eine mit der Bohrung im unteren Kernteil korrespondierende Sackbohrung. Vorzugsweise sind die Bohrungen in dem unteren und oberen Kernteil derart ausgestaltet, dass deren Querschnitt im Wesentlichen identisch ist, um ungewollte Verwirbelungen der Kühlflüssigkeit zu vermeiden.

Im zusammengesetzten Zustand des mehrteiligen Kerneinsatzes ist es somit möglich, dass eine Kühlflüssigkeit in dem unteren und oberen Kernteil zirkuliert. Gegebenenfalls kann hierzu ein Leitelement in sowohl das untere Kernteil als auch das oberer Kernelement eingesetzt werden.

Des Weiterhin weist in einer weiteren Ausführungsform mindestens eine der beiden Endflächen eine Nut zur Aufnahme eines Dichtungselements, z. B. eines O-Rings auf. Befindet sich der O-Ring in der Nut und sind das untere und das obere Kernteil miteinander verbunden, dann dichtet der O-Ring die beiden Abschnitte zueinander ab, sodass keine Kühlflüssigkeit austreten kann.

Um ungewollte Verwirbelungen der Kühlflüssigkeit zusätzlich zu vermeiden, ist es wichtig zu gewährleisten, dass die beiden Kernteile möglichst passgenau aneinandergefügt werden. Dies ist insbesondere in solchen Fällen relevant, in welchem sich die Bohrungen für die Kühlflüssigkeit nicht gleichmäßig um die zentrale Längsachse des mehrteiligen Kerneinsatzes erstrecken. Zu diesem Zweck sind in einer Ausführungsform das Befestigungselement, das obere Kernteil und das untere Kernteil so ausgestaltet, dass nur eine endliche Anzahl von Positionen des oberen Kernteils relativ zu dem unteren Kernteil möglich ist. Mit anderen Worten, das erfindungsgemäße Befestigungselement erlaubt, das obere Kernteil nur in bestimmten Winkelpositionen an dem unteren Kernteil zu befestigen, sodass bei jeder Position gewährleistet ist, dass die Bohrungen für die Kühlflüssigkeit im oberen und unteren Kernteil bündig aneinander anschließen.

Um dies zu gewährleisten, kann das Befestigungselement und/oder das untere Kernteil in einer Ausführungsform an einer bestimmten Position auf der Endfläche, die der jeweils anderen Komponente zugewandt ist, einen Vorsprung bzw. eine Vertiefung aufweisen, in welche der Vorsprung, beispielsweise ein Arretierstift, eingreift, wenn der mehrteilige Kerneinsatz zusammengesetzt wird. Damit existiert nur eine Position, in welcher das Befestigungselement relativ zu dem unteren Kernteil befestigt wird.

Um das Befestigungselement und den unteren Kerneinsatz zuverlässig miteinander zu verbinden, weist der mehrteilige Kerneinsatz in einer Ausführungsform eine solche Ausgestaltung auf, dass das untere Kernteil und das Befestigungselement zueinander korrespondierende Kontaktflächen aufweisen, die in einem zusammengesetzten Zustand des mehrteiligen Kerneinsatzes miteinander in Kontakt stehen.

In einer weiteren Ausführungsform des mehrteiligen Kerneinsatzes sind die zueinander korrespondierenden Kontaktflächen des unteren Kernteils und des Befestigungselementes mit zwei zueinander winklig, vorzugsweise senkrecht, stehenden Kontaktflächenabschnitten ausgestattet, wobei vorzugsweise jeweils einer der Kontaktflächenabschnitte des unteren Kernteiles und des Befestigungselements parallel zu der Längsachse des Befestigungselementes ausgerichtet ist. Durch die zwei zueinander winklig stehenden Kontaktflächenabschnitte werden eine bessere Halterung des Befestigungselements und damit eine bessere Fixierung zwischen dem oberen und dem unterem Kernteil ermöglicht. Diese Kontaktflächen bewirken darüber hinaus, dass ein Verkippen der beiden Abschnitte relativ zueinander während des Spritzgießvorgangs verhindert wird. Gleiches gilt für die in einer Ausführungsform winklig zueinander stehenden Anschlagsflächen zwischen oberem Kernteil und Befestigungselement.

In einer Ausführungsform ist der mehrteilige Kerneinsatz derart ausgestaltet, dass an einem der zur Längsachse parallelen Kontaktflächenabschnitte des unteren Kernteils oder des Befestigungselementes mindestens ein Vorsprung, vorzugsweise mindestens zwei Vorsprünge, in radialer Richtung ausgebildet sind und wobei an dem korrespondierenden zur Längsachse parallelen Kontaktflächenabschnitt des unteren Kernteils oder des Befestigungselements eine im Wesentlichen L-förmige Ausnehmung vorgesehen ist, in welcher der Vorsprung der korrespondierenden Kontaktfläche in einem zusammengesetzten Zustand des mehrteiligen Kerneinsatzes eingreift.

Das untere Kernteil und das Befestigungselement werden durch Ineinanderstecken entlang der Längsachse und entgegengesetztes Drehen um die Längsachse, vorzugsweise um etwa 20° bis 50°, verbunden und so auch wieder getrennt. Diese nach dem Prinzip eines Bajonettverschlusses wirkende Verbindung führt zu einer form- und/oder kraftschlüssigen Verbindung zwischen dem Befestigungselement und dem unteren Kernteil.

Die Vorsprünge können entweder an den Kontaktflächen des Befestigungselements oder an den Kontaktflächen des unteren Kernteiles angeordnet sein, wobei die L-förmige Ausnehmung in der entsprechend gegenüberliegenden Kontaktfläche angeordnet ist, sodass der Vorsprung in die Ausnehmung eingreift.

Der Vorteil einer solchen bajonettverschlussartigen Verbindung besteht darin, dass so der obere Kernteil besonders einfach von dem unteren Kernteil gelöst werden kann und dass der obere Kernteil immer in bestimmten, definierten Positionen auf dem unteren Kernteil angeordnet ist, wenn der mehrteilige Kerneinsatz zusammengesetzt ist. Gleichzeitig wird durch die jeweiligen Kontaktflächenabschnitte eine zuverlässige Verbindung zwischen dem unterem Kernteil und dem Befestigungselement gewährleistet.

In einer weiteren Ausführungsform weist das untere Kernteil an einem dem Befestigungselement zugewandten Ende einen von der Endfläche in axialer Richtung hervorstehenden Endabschnitt auf und das Befestigungselement an einem dem unteren Kernteil zugewandten Ende eine zu dem Endabschnitt des unteren Kernteils korrespondierende Vertiefung. In einem zusammengesetzten Zustand des Kerneinsatzes stehen so die Vertiefung des Befestigungselementes und der hervorstehende Endabschnitt des unteren Kernteils miteinander in Kontakt. Es versteht sich, dass umgekehrt auch das untere Kernteil an einem dem Befestigungselement zugewandten Ende eine Vertiefung aufweisen kann und das Befestigungselement an einem dem unteren Kernteil zugewandten Ende eine zu der Vertiefung des unteren Kernteils korrespondierenden hervorstehenden Endabschnitt, welche in einem zusammengesetzten Zustand wiederum in Kontakt miteinander stehen, d.h. ineinander eingreifen.

Eine solche Ausgestaltung der Verbindung zwischen dem unteren Kernteil und dem Befestigungselement ist insbesondere dann vorteilhaft, wenn der Kerneinsatz horizontal montiert wird, sodass erhöhte Hebelkräfte auf den oberen Kernteil wirken. Die beschriebene Verbindung über die Vertiefung und den hervorstehenden Endabschnitt zwischen dem unteren Kernteil und dem Befestigungselement führt in diesem Fall zu einer verbesserten Verbindung, da weder das Befestigungselement noch das obere Kernteil gegenüber dem unteren Kernteil abknicken können. Die stabile Befestigung des Kerneinsatzes ist wiederum wie eingangs beschrieben wichtig für die Qualität der produzierten Vorformlinge, da es bei Fehlpositionierungen des Kerneinsatzes zu unterschiedlichen Wandstärken des Vorformlings kommen kann oder im schlimmsten Fall zu überhaupt nicht verwendbaren Vorformlingen.

In einer weiteren Ausführungsform ist das Befestigungselement in einem zusammengesetzten Zustand des mehrteiligen Kerneinsatzes derart auf dem unteren Kernteil angeordnet, dass eine Außenfläche des Befestigungselementes bündig mit einer Außenfläche des unteren Kernteils abschließt. Dies ist insbesondere vorteilhaft, da in der Praxis häufig mehrere Kerneinsätze unmittelbar nebeneinander positioniert werden, um mehrere Vorformlinge gleichzeitig produzieren zu können. Dabei ist es sinnvoll, unnötige Überstände beispielsweise durch das Befestigungselement zu vermeiden. Durch den bündigen Abschluss der Außenflächen des Befestigungselements und des unteren Kernteils können die Kerneinsätze möglichst nah aneinander positioniert werden und mehr Vorformlinge in einem Spritzgießprozess hergestellt werden.

In einer weiteren Ausführungsform des mehrteiligen Kerneinsatzes ist das Befestigungselement derart ausgestaltet, dass das Befestigungselement mindestens ein Durchgangsloch im Bereich der Kontaktflächen des unteren Kernteiles und des Befestigungselements für mindestens ein Befestigungsmittel aufweist. Das untere Kernteil weist eine entsprechende Bohrung auf, in welche das mindestens eine Befestigungsmittel durch das Durchgangsloch des Befestigungselements eingeführt wird, um so eine form- und/oder kraftschlüssige Verbindung herzustellen. Unter einem Befestigungsmittel werden beispielsweise Schrauben oder Stifte aufgefasst, die in die entsprechenden Bohrungen an dem unteren Kernteil passen. Bei den Bohrungen handelt es sich vorzugsweise um Gewindebohrungen, die passend zu den Befestigungsmitteln ausgestaltet sind.

Vorzugsweise sind die Bohrungen und die Durchgangslöcher derart in einem spitzen Winkel zu der Längsachse des Kerneinsatzes angeordnet, dass das Befestigungselement und damit auch das obere Kernteil in Richtung des unteren Kernteils gezogen wird, wenn die Befestigungsmittel durch die Durchgangslöcher in die Bohrungen eingebracht sind.

In einer weiteren Ausführungsform weisen das Befestigungselement und das untere Kernteil jeweils mindestens einen Ausblaskanal für Ausblasluft auf. Durch diese Ausblaskanäle wird nach dem Spritzgießvorgang in hauptsächlich axialer Richtung Ausblasluft gegen den abgekühlten Vorformling gepresst, sodass das Ausformen des Vorformlings erleichtert wird. Um an dieser Stelle eine möglichst hohe Kraftübertragung der Ausblasluft auf dem Vorformling zu gewährleisten, ist es vorteilhaft, wenn der Kanal des unteren Kernteils in axialer Richtung unmittelbar an den Kanal des Befestigungselements grenzt. Etwaige je nach Positionierung zufällige Umlenkungen oder Fehlpassungen der Kanäle, die den Luftstrom um- oder ablenken, würden zu einer Kraftreduzierung führen. Durch den erfindungsgemäßen mehrteiligen Kerneinsatz wird gewährleistet, dass das Befestigungselement und das untere Kernteil nur derart zusammenbaubar sind, dass die Kanäle unmittelbar in axialer Richtung aneinander anschließen.

In einer weiteren Ausführungsform weist das Befestigungselement an einem dem unteren Kernteil abgewandten Ende eine vorzugsweise kegelstumpfförmige Vertiefung auf. In dieser Vertiefung kann beispielsweise ein Halsring oder ein anderer korrespondierender Abschnitt der Spritzgießform aufgenommen werden, um den Formraum für den Vorformling zu vervollständigen. Gleichzeitig führt das Eingreifen eines Halsrings oder eines anderen korrespondieren Abschnitts der Spritzgießform zu einer zusätzlichen Stabilisierung des oberen Kernteils während dem Spritzgießvorgang, indem der korrespondierende Teil entsprechende Anlageflächen aufweist, die mit korrespondieren Anlageflächen auf dem oberen Kernteil in Kontakt treten.

Es hat sich zudem gezeigt, dass eine bestimmte Anordnung der Ausblaskanäle relativ zu der Anordnung des Halsrings für die Langlebigkeit insbesondere des Befestigungselements von Bedeutung ist. Üblicherweise besteht ein Halsring aus zwei Teilen, die in der Mitte des Halsrings durch einen kleinen Spalt getrennt sind. Sind die Öffnungen der Ausblaskanäle in dem Bereich der Spalten angeordnet, führt dies zu einer erhöhten Krafteinwirkung auf das Befestigungselement, was wiederum nach einer gewissen Zeit zu Rissbildungen in dem Befestigungselement führt. Werden die Öffnungen der Ausblaskanäle jedoch leicht gegenüber dem Spalt des Halsrings verdreht, kann die Rissbildung verringert und damit die Langlebigkeit des Befestigungselements deutlich erhöht werden. Auch daher ist es vorteilhaft, wenn das Befestigungselement in einer definierten Position an dem unteren Kernteil befestigt werden kann.

In einer weiteren Ausführungsform sind die Materialien des oberen und unteren Kernteils sowie des Befestigungselements unterschiedlich. Durch die Verwendung unterschiedlicher Materialien werden die unterschiedlichen äußeren Einflüsse, die auf die jeweiligen Komponenten des mehrteiligen Kerneinsatzes wirken, berücksichtigt. So ist es denkbar, dass das untere Kernteil und das Befestigungselement aus einem Material bestehen, welches robuster ist und eine höhere Festigkeit gegenüber Krafteinwirkungen besitzt als das obere Kernteil. Bei dem unterem Kernteil und/oder dem Befestigungselement können zugleich Materialien verwendet werden, die sonst bei dem Spritgießverfahren keinen Verwendung finden würden, da diese Materialien Eigenschaften aufweisen, die sich negativ auf die Schmelze auswirken würden, z.B. Wärmeleiteigenschaften, gleichzeitig aber über geeignetere mechanische Eigenschaften verfügen als Materialien, die in Kontakt mit der Schmelze treten können. So kann das obere Kernteil auch über eine spezielle Beschichtung verfügen, die beispielsweise das Entformen des Vorformlings erleichtert.

Zumindest in einer Ausführungsform wird daher auch eine Spritzgießform zur Herstellung von Vorformlingen mit einem der beschriebenen mehrteiligen Kerneinsätze und einem Kavitäteneinsatz beansprucht, wobei die Spritzgießform in einem zusammengesetzten Zustand einen Vorraum aufweist, dessen Kontur der Kontur des herzustellenden Vorformlings entspricht. Der Kerneinsatz und der Kavitäteneinsatz weisen in diesem Fall jeweils formbildende Abschnitte auf, die in dem zusammengesetzten Zustand der Spritzgießform zumindest einen Teil der Kontur des Formraums formen.

Der Kavitäteneinsatz der Spritzgießform kann zweiteilig ausgestaltet sein und aus einem hohlzylindrischen Abschnitt und einem Bodeneinsatz bestehen. Der Bodeneinsatz kann eine Öffnung aufweisen, über die das Einspritzen der plastifizierten Schmelze erfolgt. Diese Öffnung wird auch als Pforte bezeichnet.

Die Ausblaskanäle können während dem Spritzgießvorgang auch zur Entlüftung des Formraums genutzt werden, indem die von der Schmelze verdrängte Luft aus dem Formraum über die Ausblaskanäle abfließt. Dazu weist in einer weiteren Ausführungsform der vorliegenden Erfindung das Befestigungselement Abschnitte auf, die den Konturabschnitt bilden. Dies hat zur Folge, dass das Befestigungselement mit dem Formraum in Verbindung steht und daher zur Entlüftung des Formraums während des Spritzgießvorgangs verwendet werden kann.

Es kann jedoch für manche Anwendungen auch von Vorteil sein, wenn das Befestigungselement keine Abschnitte aufweist, die den Konturabschnitt bilden. Dann kann das Befestigungselement als Standardteil ausgebildet sein, welches für unterschiedliche Einsätze verwendet werden kann. In diesem Fall erfolgt die individuelle Anpassung des Kerneinsatzes an die gewünschte Kontur des Vorformlings ausschließlich durch das obere Kernteil und den Kavitäteneinsatz. Alle anderen Teile des Kerneinsatzes sind unabhängig von der Kontur des Vorformlings und können beim Spritzgießformhersteller bevorratet werden.

In einer weiteren Ausführungsform weist die Spritzgießform zusätzlich einen Halsring auf, wobei der Halsring einen formbildenden Abschnitt zur Bildung eines Gewindes eines Vorformlings besitzt und wobei der Halsring an einem dem Befestigungselement zugewandten Ende Anlageflächen aufweist, die einer kegelstumpfförmigen Vertiefung des Befestigungselementes entsprechen. In dem zusammengesetzten Zustand der Spritzgießform sind so die Anlageflächen des Halsrings und die kegelstumpfförmige Vertiefung des Befestigungselements formschlüssig miteinander in Eingriff.

Es ist vorteilhaft, wenn bei einer solchen Ausführungsform der Kern ebenfalls schwimmend gelagert ist, da in diesem Fall weniger Reibung bei dem Einführen des Halsrings in das Befestigungselement auftritt und damit auch weniger Verschleiß an dem Befestigungselement bzw. dem Halsring.

Um den Vorformling leicht aus der Spritzgießform entnehmen zu können, ist der Halsring in einer Ausführungsform zweiteilig ausgebildet, so dass durch ein Auseinanderbewegen dieser beiden Teile der Vorformling der Spritzgießform entnommen werden kann.

Eine Entnahme eines Vorformlings aus der Spritzgießform erfolgt in der Regel durch das Öffnen des zweiteiligen Halsringes und ein "Auseinanderfahren" der Spritzgießform an dieser Stelle. Nach der Entnahme fährt die Spritzgießform wieder zusammen, um einen weiteren Spritzgießvorgang vornehmen zu können. Bei diesem Zusammenfahren erfahren vor allem die Teile große Krafteinwirkungen, an denen sich die Spritzgießform öffnet. So können z.B. Reibungskräfte auftreten bzw. erfahren die Körper beim Zusammenstoß eine Kompression und einen Impulsübertrag. Hierdurch ist vor allem an diesen Teilen der Verschleiß besonders groß. Zu den Teilen des Kerneinsatzes, die diesem Verschleiß unterliegen gehören das obere Kernteil und das Befestigungselement. Durch die mehrteilige Ausgestaltung des Kerneinsatzes müssen nur die verschlissenen Teile ausgetauscht werden, während die anderen Teile weiter verwendet werden können. Der Austausch der Teile erfolgt bei dem erfindungsgemäßen Kerneinsatz zeitsparend, sodass mehr Vorformlinge in kürzerer Zeit produziert werden können und Produktionsanlagen schneller auf veränderte Formen der Vorformlinge umgestellt werden können.

Darüber hinaus bildet sich aufgrund der wirkenden Reibungskräfte während dem Zusammenfahren der Spritzgießform eine exakte Passung zwischen bestimmten Oberflächenpunkten des oberen Kernteil und des Befestigungselements einerseits und entsprechenden Oberflächenpunkten des Kavitäteneinsatzes und des Halsrings andererseits aus. Diese Passung ist jedoch nur für eine bestimmte Position des Befestigungselements und oberen Kerneinsatzes gegeben. Selbst eine leichte Drehung des Befestigungselements und des oberen Kerneinsatzes bewirkt bei einem erneuten Zusammenfahren der Spritzgießform, dass andere Oberflächenpunkte mit denjenigen des Kavitäteneinsatzes und Halsrings in Kontakt treten und es an dieser Stelle zu einem erneuten Verschleiß aufgrund der Reibungskräfte kommt. Wird also sichergestellt, dass das Befestigungselement und der obere Kerneinsatz immer in der gleichen Position relativ zu dem unteren Kernteil positioniert sind, wird der Verschleiß der Spritzgießkomponenten verringert.

Aus den Vorformlingen können unterschiedliche Behältnisse geformt werden, die z.B. unterschiedliche Materialdicken, unterschiedliche Längen oder unterschiedliche Formen aufweisen können. Die Form des Vorformlings wird durch die konturbildenden Abschnitte des Halsrings, des Kavitäteneinsatzes, des oberen Kernteils und optional des Befestigungselements bestimmt. Durch die mehrteilige Ausgestaltung der Spritzgießform und des Kerneinsatzes wird daher eine Veränderung der Kontur der Vorformlinge durch den Austausch einzelner oder aller dieser Teile ermöglicht. Zusätzlich stellt die mehrteilige Ausgestaltung des Kerneinsatzes eine zusätzliche Kostenersparnis dar, da hierdurch lediglich das obere Kernteil getauscht werden muss, um eine Konturänderung zu verwirklichen, während das untere Kernteil für unterschiedliche obere Kernteile genutzt werden kann.

Weitere Vorteile, Merkmale und Anwendungsmöglichkeiten werden deutlich anhand der folgenden Beschreibung bevorzugter Ausführungsformen und der dazugehörigen Figuren. Gleiche Bestandteile in den Figuren sind mit gleichen Bezugszeichen bezeichnet. Es zeigen:
- Figur 1: eine Schnittzeichnung einer Spritzgießform mit einer Ausführungsform des Kerneinsatzes,
- Figur 2: eine Schnittzeichnung einer Ausführungsform des Kerneinsatzes mit Vorformling, aber ohne Kavitäteneinsatz und Halsring,
- Figur 3: eine Schnittzeichnung einer anderen Ausführungsform des Kerneinsatzes.

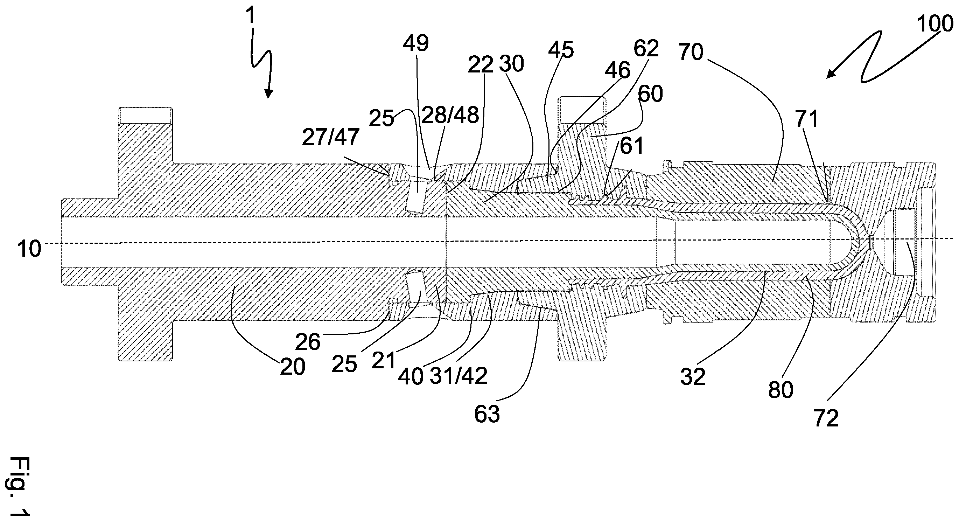

Figur 1 zeigt eine Spritzgießform 100 mit einem um eine Längsachse 10 rotationssymmetrischen, mehrteiligen Kerneinsatz 1, einem Halsring 60 und einem Kavitäteneinsatz 70. Der mehrteilige Kerneinsatz 1 weist ein unteres Kernteil 20, ein oberes Kernteil 30 und ein Befestigungselement 40 auf, wobei alle Komponenten einen im Wesentlichen zylindrischen Aufbau haben. Das Befestigungselement 40 weist eine Öffnung in axialer Richtung auf. Der Durchmesser der Öffnung variiert jedoch in axialer Richtung, um eine formschlüssige Verbindung sowohl mit dem oberen Kernteil 30 als auch mit dem unteren Kernteil 20 zu gewährleisten.

Das untere Kernteil 20 verfügt über einen von der Endfläche 26 in axialer Richtung hervorstehenden Endabschnitt 21, wobei in dem Endabschnitt 21 zwei Gewindebohrungen 25 eingelassen sind, die der Befestigung des Befestigungselements 40 an dem unteren Kernteil 20 dienen. Die Gewindebohrungen 25 sind unter einen spitzen Winkel gegenüber der Längsachse 10 angeordnet.

Das obere Kernteil 30 wird mithilfe des Befestigungselements 40 an dem unteren Kernteil 20 fixiert. Dazu weist die Öffnung des Befestigungselements 40 an einem dem unteren Kernteil 20 zugewandten Ende einen solchen Durchmesser auf, dass der hervorstehende Endabschnitt 21 des unteren Kernteils 20 formschlüssig aufnehmbar ist. Dadurch weisen das Befestigungselement 40 und der untere Kerneinsatz 20 zwei zueinander senkrecht stehende Kontaktflächenabschnitte 27, 28, 47, 48 auf, wobei die Kontaktflächenabschnitte 28, 48 parallel zu der Längsachse 10 des Befestigungselements 40 angeordnet sind.

In dem Bereich der parallelen Kontaktflächen 28, 48 befinden sich in dem Befestigungselement 40 Durchgangsbohrungen 49, in welche ein Befestigungsmittel, beispielsweise eine Schraube (nicht gezeigt), eingebracht werden kann, welches in die Gewindebohrungen 25 des unteren Kernteiles 20 eingreift. Auf diese Weise wird eine Kraft insbesondere in radialer Richtung zwischen dem Befestigungselement 40 und dem unteren Kernteil 20 bewirkt.

Die Außendurchmesser des unteren Kernteils 20 und des Befestigungselements 40 sind so gewählt, dass deren Außenflächen bündig abschließen.

Zur Aufnahme des oberen Kernteils 30 in das Befestigungselement 40, ist die Öffnung des Befestigungselements 40 weiterhin derart ausgestaltet, dass das obere Kernteil 30 in die Öffnung aufnehmbar ist. Das obere Kernteil 30 und die Öffnung des Befestigungselements 40 weisen zueinander korrespondierende Anschlagsflächen 31, 42 auf, die konisch ausgestaltet sind. An die konisch ausgestalten Anschlagsflächen schließen sich in Richtung des unteren Kernteiles 20 zwei Kontaktflächenabschnitte an, die senkrecht zueinander stehen, wobei einer der Kontaktflächenabschnitte wiederum parallel zu der Längsachse 10 verläuft.

Durch die Kombination aus senkrecht zueinander stehenden Kontaktflächenabschnitten und konischen Kontaktflächen 31, 42 wird eine feste Verbindung zwischen dem Befestigungselement 40 und dem oberen Kernteil 30 erzielt. Gleiches gilt für die Verbindung zwischen den Befestigungselement 40 und dem unteren Kernteil 20, sodass insgesamt ein Verkippen des oberen Kernteils 30 gegenüber dem unteren Kernteil 20 verhindert wird.

Um einen Vorformling, der in einem Formraum 80 gebildet wird, möglichst schnell aus der Spritzgießform 100 lösen zu können, weist der mehrteilige Kerneinsatz 1 ein Kühlsystem auf. Zu diesem Zweck befindet sich in dem unteren Kernteil 20 eine Durchgangsbohrung, in welcher eine Kühlflüssigkeit geführt wird. Der obere Kernteil 30 weist eine Sackbohrung zur Führung von Kühlflüssigkeit auf, deren Durchmesser dem Durchmesser der Durchgangsbohrung des unteren Kernteils 20 entspricht.

Durch die Befestigung des Befestigungselements 40 an dem unteren Kernteil 20 wird das obere Kernteil 30 an dem unteren Kernteil 20 derart angeordnet, dass nur zwei mögliche Positionen für die Anordnung des Befestigungselements 40 existieren, wobei die Bohrungen des oberen und unteren Kernteiles 20, 30 zur Führung der Kühlflüssigkeit in jedem Fall bündig aneinander anschließen.

Zur Ausbildung eines Vorformlings weist die Spritzgießform 100 einen Formraum 80 auf, dessen Kontur der Kontur des herzustellenden Vorformlings entspricht. Der obere Kerneinsatz 30 und der Kavitäteneinsatz 70 weisen jeweils formbildende Abschnitte 32, 71 auf, die einen Teil der Kontur des Formraums 80 formen. Der andere Teil des Formraums 80 wird von einem formbildenden Abschnitt 61 des Halsrings 60 gebildet, wobei der formbildende Abschnitt 61 des Halsrings 60 derart ausgestaltet ist, dass ein Gewinde eines Vorformlings gebildet wird.

Der Halsring weist an einem dem Befestigungselement 40 zugewandten Ende Anlageflächen 63 auf, die einer kegelstumpfförmigen Vertiefung 45 des Befestigungselements 40 an einem dem unteren Kernteil 20 abgewandten Ende 46 des Befestigungselements 40 entsprechen, sodass die Anlageflächen 63 des Halsrings 60 und die Mantelfläche der kegelstumpfförmigen Vertiefung 45 des Befestigungselements 40 formschlüssig miteinander in Eingriff sind. Darüber hinaus weist der Halsring 60 zu der Längsachse 10 parallele Anlageflächen 62 auf, die mit dem oberen Kernteil 30 in Kontakt stehen. Dadurch wird der obere Kerneinsatz 30 nochmals zusätzlich stabilisiert.

Der Kavitäteneinsatz 70 weist eine Pforte 72 auf, über welche die plastifizierte Schmelze während des Spritzgießvorgangs in den Formraum 80 eingespritzt wird, wodurch sich ein Vorformling bildet.

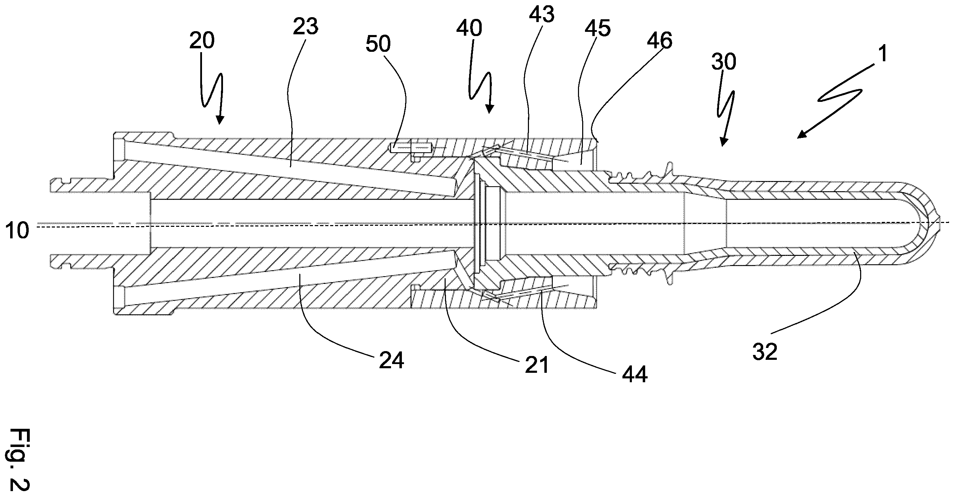

Wenn die eingespritzte plastifizierte Schmelze ausgekühlt ist, wird der Kavitäteneinsatz 70 sowie der Halsring 60 entfernt, indem die Komponenten in axialer Richtung von dem mehrteiligen Kerneinsatz 1 weggeführt werden. Der Vorformling verbleibt zunächst an dem Kerneinsatz wie in Figur 2 dargestellt. Um den gefertigten Vorformling von dem oberen Kernteil 30 zu entfernen, wird Ausblasluft durch Ausblaskanäle 23, 24, 43, 44 geblasen, die eine Kraft auf den Vorformling parallel zu der Längsachse 10 ausübt, sodass sich der Vorformling von dem oberen Kernteil 30 löst.

Der Ausblaskanal 23 und der Ausblaskanal 24 des unteren Kernteils 20 sind an gegenüberliegenden Seiten des unteren Kernteils 20 angeordnet. Die zwei Ausblaskanäle 43, 44 des Befestigungselements 40 stehen mit den Ausblaskanälen 23, 24 des unteren Kernteils 20 unmittelbar in Verbindung und sind zwischen den Durchgangsbohrungen 49 angeordnet sind. Die Ausblaskanäle 43 und 44 des Befestigungselements 40 münden in die Vertiefung 45 des Befestigungselements 40, welche sich an einem dem unteren Kernteil 20 abgewandten Ende 46 des Befestigungselements 40 befindet. Die Vertiefung 45 ist kegelstumpfförmig ausgeführt. Durch die definierte Positionierung des Befestigungselements 40 gegenüber dem unteren Kernteil 20 liegen die Öffnungen der Ausblaskanäle 23, 24, 43, 44 unmittelbar in Richtung der Längsachse 10 übereinander. Die definierte Positionierung wird durch einen Arretierstift 50 erreicht.

Das Material des oberen Kernteils 30, des Kavitäteneinsatzes 70 und des Halsrings 60 ist derart gewählt, dass es eine besonders hohe Wärmeleitfähigkeit aufweist, um den Vorformling so schnell wie möglich abzukühlen. Darüber hinaus sind die den Formraum 80 bildenden Abschnitte dieser Komponenten mit einer Beschichtung beschichtet, die das Lösen des Vorformlings aus der Spritzgießform 100 erleichtert. Das Befestigungselement 40 und das untere Kernteil 20 sind hingegen aus einem besonders robusten Stahl gefertigt, der den wirkenden Kräften besonders gut standhält.

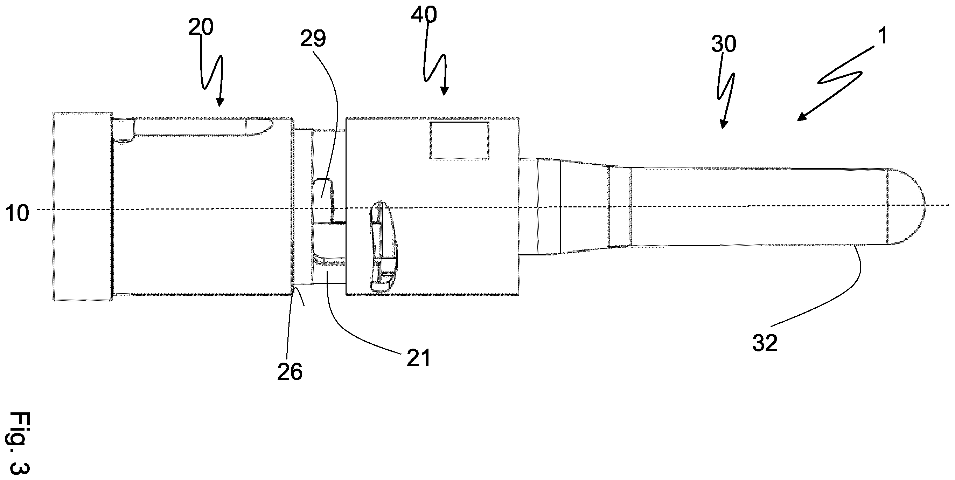

Figur 3 zeigt eine Ausführungsform eines mehrteiligen Kerneinsatzes 1, bei welcher ein anderer Befestigungsmechanismus für das Befestigungselement 40 an dem unteren Kernteil 20 gewählt wurde. Die Aufnahme des oberen Kernteils 30 in dem Befestigungselement 40 kann wie oben beschrieben ausgestaltet sein.

Um das Befestigungselement 40 an dem unteren Kernteil 20 zu fixieren, ist in dem Endabschnitt 21 eine L-förmige Ausnehmung 29 angeordnet. Zur kraftschlüssigen Verbindung zwischen den Befestigungselement 40 und dem unteren Kernteil 20 weist das Befestigungselement 40 an der die Vertiefung in radialer Richtung begrenzenden Innenfläche weiterhin einen Vorsprung auf, welcher in die L-förmige Ausnehmung 29 eingreift, wenn das Befestigungselement 40 in axialer Richtung auf das untere Kernteil 20 geschoben wird. Durch eine anschließende Drehbewegung um die Längsachse 10, bewegt sich der Vorsprung in den senkrecht zur Längsachse 10 ausgerichteten Abschnitt der L-förmigen Ausnehmung 29 und bewirkt, dass das Befestigungselement 40 und das untere Kernteil 20 gegeneinander geklemmt werden.

Diese Verbindung nach dem Prinzip eines Bajonettverschlusses, erlaubt eine besonders schnelle und einfache Auswechselung des oberen Kernteiles 30, wenn dieser verschlissen ist oder ein anderer Formraum 80 gebildet werden soll.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombiniert sind, soweit dies nicht ausdrücklich ausgeschlossen wurde oder technische Gegebenheiten derartige Kombination unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. Die Zeichnungen sind maßstabsgetreu ausgeführt. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichen liste

- 1: mehrteiliger Kerneinsatz
- 10: Längsachse
- 20: unterer Kernteil
- 21: hervorstehender Endabschnitt
- 22: Ende des unteren Kernteils
- 23, 24: Ausblaskanal des unteren Kernteils
- 25: Gewindebohrung
- 26: Endfläche des unteren Kernteils
- 27, 28: Kontaktflächen des unteren Kernteils
- 29: L-förmige Ausnehmung
- 30: oberer Kernteil
- 31, 42: Anschlagsflächen des oberen Kernteils bzw. des Befestigungselements
- 32: formbildender Abschnitt des oberen Kernteils
- 40: Befestigungselement
- 43, 44: Ausblaskanal des Befestigungselements
- 45: Vertiefung
- 46: Ende des Befestigungselements
- 47, 48: Kontaktflächen des Befestigungselements
- 49: Durchgangsbohrung
- 50: Arretierstift
- 60: Halsring
- 61: formbildender Abschnitt des Halsrings
- 62: Zur Längsachse parallele Anlagefläche des Halsrings
- 63: konische Anlagefläche des Halsrings
- 70: Kavitäteneinsatz
- 71: formbildender Abschnitt des Kavitäteneinsatzes
- 72: Pforte
- 80: Formraum
- 100: Spritzgießform

## Patentansprüche

1. Mehrteiliger Kerneinsatz (1) für eine Spritzgießform (100) zur Herstellung von Vorformlingen aufweisend
einen zweiteiligen Kern mit einer Längsachse (10), wobei der zweiteilige Kern ein unteres Kernteil (20) und ein in Richtung der Längsachse neben dem unteren Kernteil (20) angeordnetes oberes Kernteil (30) aufweist und
ein Befestigungselement (40),
wobei das Befestigungselement (40) eine Öffnung parallel zu der Längsachse (10) zur Aufnahme des oberen Kernteils (30) aufweist, und
wobei mit dem Befestigungselement (40) das obere Kernteil (30) an einem Ende (22) des unteren Kernteils (20) befestigbar ist,
**dadurch gekennzeichnet, dass**
Befestigungselement (40) und oberes Kernteil (30) derart ausgebildet sind, dass, wenn das obere Kernteil (30) in der Öffnung aufgenommen ist zumindest in axialer Richtung eine form- und/oder kraftschlüssige Verbindung zwischen dem im Befestigungselement (40) aufgenommenen oberen Kernteil (30) und dem Befestigungselement (40) herstellbar ist, und dass das Befestigungselement (40) und das untere Kernteil (20) derart ausgestaltet sind, dass das Befestigungselement (40) nur in einer Position oder in mehreren Positionen, die sich durch eine Drehung des Befestigungselementes (40) relativ zum unteren Kernteil (20) um die Längsachse (10) unterscheiden, am unteren Kernteil befestigt werden kann, wobei nur eine endliche Anzahl von Positionen, vorzugsweise maximal vier Positionen, des Befestigungselements (40) relativ zu dem unteren Kernteil (20) möglich sind.

2. Mehrteiliger Kerneinsatz (1) nach Anspruch 1, wobei das obere Kernteil (30) und die Öffnung des Befestigungselements (40) zueinander korrespondierende Anschlagsflächen (31,42), wobei die Anschlagsflächen vorzugsweise derart ausgebildet sind, dass eine axiale Relativbewegung des Befestigungselements (40) gegenüber dem oberen Kernteil (30) in Richtung des dem unteren Kernteil (20) zugewandten Teils des oberen Kernteils (30) und/oder eine radiale Relativbewegung zwischen Befestigungselement (40) und oberem Kernteil (30) begrenzt wird.

3. Mehrteiliger Kerneinsatz (1) nach Anspruch 2, wobei die korrespondierenden Anschlagsflächen (31, 42) konisch ausgestaltet sind.

4. Mehrteiliger Kerneinsatz nach Anspruch 2, wobei die korrespondierenden Anschlagsflächen (31, 42) zwei zueinander senkrecht, stehende Anschlagsflächenabschnitte aufweisen, wobei vorzugsweise jeweils einer der Anschlagsflächenabschnitte des oberen Kernteiles (30) und der Öffnung des Befestigungselements (40) parallel zu der Längsachse (10) des Befestigungselements (40) ist.

5. Mehrteiliger Kerneinsatz (1) nach einem der Ansprüche 2 bis 4, wobei das Befestigungselement (40) derart ausgestaltet ist, dass die Anschlagsfläche (42) des Befestigungselements (40) und die Anschlagsfläche (31) des oberen Kernteils (30) mit einer Spielpassung aufeinander angepasst sind, so dass das obere Kernteil (30) auch in einem zusammengesetzten Zustand des mehrteiligen Kerneinsatzes (1) schwimmend in dem Befestigungselement (40) gelagert ist, so dass die Anschlagsflächen (31,42) zumindest in radialer Richtung nicht oder nicht vollumfänglich miteinander in Kontakt stehen.

6. Mehrteiliger Kerneinsatz (1) nach einem der vorhergehenden Ansprüche, wobei das untere Kernteil (20) und das Befestigungselement (40) zueinander korrespondierende Kontaktflächen (27, 28, 47, 48) aufweisen, die in einem zusammengesetzten Zustand des mehrteiligen Kerneinsatzes (1) miteinander in Kontakt stehen.

7. Mehrteiliger Kerneinsatz (1) nach Anspruch 6, wobei die zueinander korrespondierenden Kontaktflächen des unteren Kernteils (20) und des Befestigungselementes (40) zwei zueinander senkrecht, stehende Kontaktflächenabschnitte (27, 28, 47, 48) aufweisen, wobei vorzugsweise jeweils einer der Kontaktflächenabschnitte (28, 48) des unteren Kernteiles (20) und des Befestigungselements (40) parallel zu der Längsachse (10) ausgerichtet ist.

8. Mehrteiliger Kerneinsatz (1) nach Anspruch 7, wobei an einem der zur Längsachse (10) parallelen Kontaktflächenabschnitte (28, 48) mindestens ein Vorsprung, vorzugsweise mindestens zwei Vorsprünge, in radialer Richtung ausgebildet sind und wobei an der korrespondierenden zur Längsachse (10) parallelen Kontaktfläche (28, 48) eine im Wesentlichen L-förmige Ausnehmung (29) ausgebildet ist, in welche der Vorsprung der korrespondieren Kontaktfläche (28, 48) in einem zusammengesetzten Zustand des mehrteiligen Kerneinsatzes (1) eingreift, so dass eine form- und/oder kraftschlüssige Verbindung zwischen dem Befestigungselement (40) und dem unteren Kernteil (20) besteht, wobei vorzugsweise L-förmige Ausnehmung (29) und Vorsprung bzw. Vorsprünge derart ausgebildet sind, dass das untere Kernteil und das Befestigungselement durch Ineinanderstecken entlang der Längsachse und entgegengesetztes Drehen um die Längsachse um einen Drehwinkel, der am besten zwischen 20° und 50° liegt, miteinander verbunden werden können.

9. Mehrteiliger Kerneinsatz (1) nach einem der vorhergehenden Ansprüche, wobei das untere Kernteil (20) an einem dem Befestigungselement (40) zugewandten Ende einen von der Endfläche (26) in axialer Richtung hervorstehenden Endabschnitt (21) aufweist und wobei das Befestigungselement (40) an einem dem unteren Kernteil (20) zugewandten Ende eine zu dem Endabschnitt (21) des unteren Kernteils (20) korrespondierende Vertiefung aufweist, so dass die Vertiefung des Befestigungselement (40) und der hervorstehende Endabschnitt (21) des unteren Kernteils (20) miteinander in Kontakt stehen oder wobei das untere Kernteil (20) an einem dem Befestigungselement (40) zugewandten Ende (26) eine Vertiefung aufweist und wobei das Befestigungselement (40) an einem dem unteren Kernteil (20) zugewandten Ende eine zu der Vertiefung des unteren Kernteils (20) korrespondierenden hervorstehenden Endabschnitt aufweist, so dass der hervorstehende Endabschnitt des Befestigungselement (40) und die Vertiefung des unteren Kernteils (20) miteinander in Kontakt stehen.

10. Mehrteiliger Kerneinsatz (1) nach Anspruch 9, wobei das Befestigungselement (40) in einem zusammengesetzten Zustand des mehrteiligen Kerneinsatzes (1) derart auf dem unteren Kernteil (20) angeordnet ist, dass eine Außenfläche des Befestigungselements (40) bündig mit einer Außenfläche des unteren Kernteils (20) abschließt.

11. Mehrteiliger Kerneinsatz (1) nach einem der Ansprüche 6 bis 10, wobei das Befestigungselement (40) derart ausgestaltet ist, dass das Befestigungselement (40) mindestens ein Durchgangsloch (49) im Bereich der Kontaktflächen (27, 28, 47, 48) des unteren Kernteiles (20) und des Befestigungselements (40) für mindestens ein Befestigungsmittel aufweist und wobei das untere Kernteil (20) mindestens eine Bohrung (25), vorzugsweise eine Gewindebohrung, aufweist, wobei das mindestens eine Befestigungsmittel durch das Durchgangsloch (49) des Befestigungselements (40) in die Bohrung (25) des unteren Kernteils (20) eingeführt wird, um eine form- und/oder kraftschlüssige Verbindung herzustellen.

12. Mehrteiliger Kerneinsatz (1) nach einem der vorhergehenden Ansprüche, wobei das Befestigungselement (40) und der untere Kernteil (20) jeweils mindestens einen Ausblaskanal (23,24,43,44) für Ausblasluft aufweisen und wobei das Befestigungselement (40) in einem zusammengesetzten Zustand des mehrteiligen Kerneinsatzes (1) derart an den unteren Kernteil (20) festgelegt ist, dass die Ausblaskanäle (23, 24, 43, 44) unmittelbar in axialer Richtung aneinander anschließen.

13. Mehrteiliger Kerneinsatz (1) nach einem der vorhergehenden Ansprüche, wobei das Befestigungselement (40) an einem dem unteren Kernteil (20) abgewandten Ende (46) eine vorzugsweise kegelstumpfförmige Vertiefung (45) aufweist.

14. Spritzgießform (100) zur Herstellung von Vorformlingen mit einem mehrteiligen Kerneinsatz (1) nach einem der vorhergehenden Ansprüche und einem Kavitäteneinsatz (70), wobei die Spritzgießform (100) in einem zusammengesetzten Zustand einen Formraum (80) aufweist, dessen Kontur der Kontur des herzustellenden Vorformlings entspricht, wobei der Kerneinsatz (1) und der Kavitäteneinsatz (70) jeweils formbildende Abschnitte (32, 71) aufweisen, die in dem zusammengesetzten Zustand der Spritzgießform (100) zumindest einen Teil der Kontur des Formraums (80) formen.

15. Spritzgießform (100) nach Anspruch 14 aufweisend einen Halsring (60), wobei der Halsring (60) einen formbildenden Abschnitt (61) zur Bildung eines Gewindes eines Vorformlings besitzt, wobei ein Kerneinsatz (1) gemäß Anspruch 13 vorgesehen ist und der Halsring (60) an einem dem Befestigungselement (40) zugewandten Ende Anlageflächen (63) aufweist, die der kegelstumpfförmigen Vertiefungen (45) des Befestigungselements (40) entsprechen, sodass in dem zusammengesetzten Zustand der Spritzgießform (100) die Anlageflächen (63) des Halsrings (60) und die kegelstumpfförmige Vertiefung (45) des Befestigungselements (40) formschlüssig miteinander in Eingriff sind.
